# EUROPEAN PATENT APPLICATION

(11) **EP 1 160 144 A1**
(43) Date of publication of application: **05.12.2001**
(21) Application number: 01500126.6
(22) Date of filing: 18.05.2001
(51) Int. Cl.: B62B 3/02, B62B 5/06

(54) **Improved shopping cart**

(30) Priority: 02.06.2000 ES 200001491 U
(71) Applicant: Germans Server, S.L., 03750 Pedreguer (Alicante) (ES)
(72) Inventor: Server Pérez, Juan, 03750 Pedreguer (Alicante) (ES)
(74) Representative: Ungria Lopez, Javier

(57) **Abstract**

It comprises an inverted U-shaped frame (1) with a collapsible bottom support (6) to support the shopping bag.

Furthermore, it includes two front supports (2) supporting the respective wheels (3) and a rear support (10) that includes two other wheels (11) in such a way that all the supports may take on a folded position and another unfolded position.

Means to limit the stable folded and unfolded positions of the two front supports (2) have been provided for.

The inclusion of an independent handle (13) that fits in the top part of the frame (1) has also been provided for.

## Description

### OBJECT OF THE INVENTION

The present invention refers to an improved shopping cart that comprises in principle a frame with a collapsible bottom support where a shopping bag sits. The bag in turn is connected to the frame itself.

On the other hand, the cart includes a base structure like the cart of utility model no. 9902348. It comprises two front supports supporting the respective wheels and a rear support that includes two other wheels.

All the supports may take on a folded position and another unfolded position.

The object of the invention is centered in the first place on some means to limit the stable folded and unfolded positions of the front supports supporting the respective wheels.

A second object of the invention is centered on an independent handle that fastens and easily fits in the top part of the frame of the cart assembly of the invention.

### BACKGROUND OF THE INVENTION

In general, shopping carts generally comprise a frame with some wheels for easy transport, as well as a support where the shopping bag sits and is supported.

In some cases, the support is fixed, whereas in other cases it is collapsible.

On the other hand, some carts include a pair of wheels, whereas others include two pairs of wheels coupled in pairs to some small supports connected to the frame.

Among carts that have four wheels, those that include a rear support with two wheels, a support that articulates in some fixed parts integral to each one of the branches of the inverted U-shaped frame should be pointed out.

Utility models numbers 91015036, 9302636 and 9400276 correspond to this type of cart.

On the other hand, utility model number 9902348 consists of a shopping cart that includes two front supports with respective wheels and a rear support with two other wheels. It also includes a collapsible support where a shopping bag is supported.

The front supports as well as the rear support are coupled to the frame of the cart, at the same time that they are foldable, just like in the case of the support where the bag sits.

The front supports do not have their own means to limit the end folded and unfolded positions, which represents an inconvenience when the respective cart assembly is folded and unfolded.

### DESCRIPTION OF THE INVENTION

The improved shopping cart that comprises the object of the invention is defined by an inverted U-shaped frame. Some front supports capable of turning around said branches are coupled in the end sections of its parallel branches, the cited supports having respective wheels.

There is a rear support that has another pair of wheels coupled to the branches of the frame, at the same time that the rear support is jointedly connected to the branches of the frame by means of a cross shaft. This support may take on an unfolded position maintaining a slant and also a folded position where said support will be placed approximately in a plane parallel to the frame.

The cart also includes a collapsible bottom support where a shopping bag sits, a support that is coupled jointedly to the branches of the frame by means of some parts where the two front supports abut at the top. On the contrary, the two front supports are retained at the bottom by other parts integral to the ends of the branches of the frame.

The two front supports may take on two end positions: a folded one and another unfolded one. For this purpose, some means to achieve and maintain each one of these stable positions have been provided for. Thanks to these means the folding and unfolding of the two front supports are substantially simplified.

On the other hand when the front supports are in the unfolded position, the support where the bag sits may be placed in an unfolded and horizontal position being retained in some recesses of the front supports.

The cart also includes an independent handle that fits and fastens in the top part of the frame. Furthermore, this new handle rigidifies the frame without using other additional elements as is conventionally the case.

Hereinafter to provide a better understanding of this specification, some figures that represent the object of the invention are attached hereto.

### BRIEF DESCRIPTION OF THE DRAWINGS

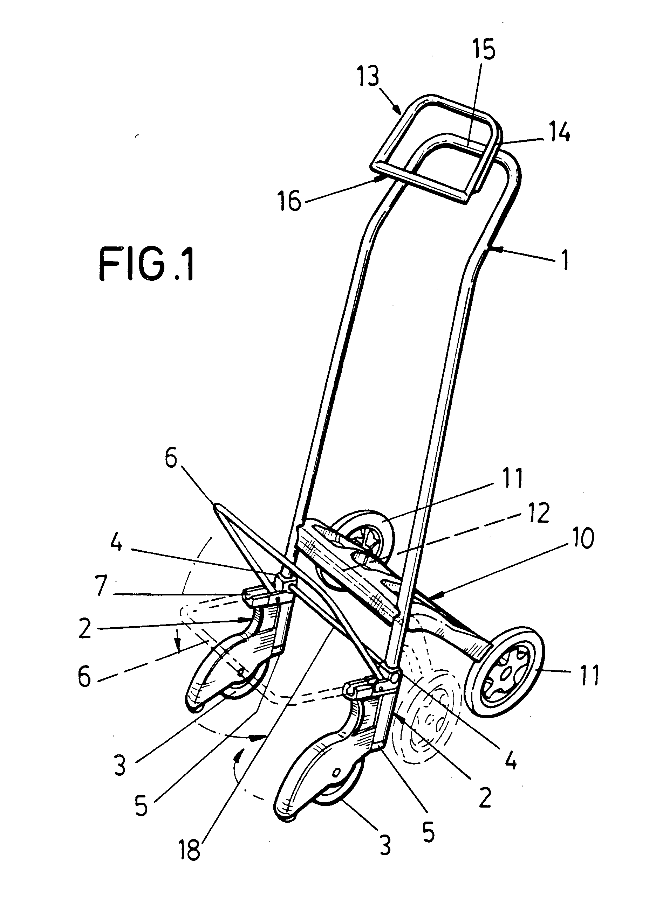

Figure 1 represents a perspective view of the improved shopping cart, object of the invention. It basically comprises a frame where two front supports with respective wheels, a rear support also with wheels and a support where the bag sits, are coupled.

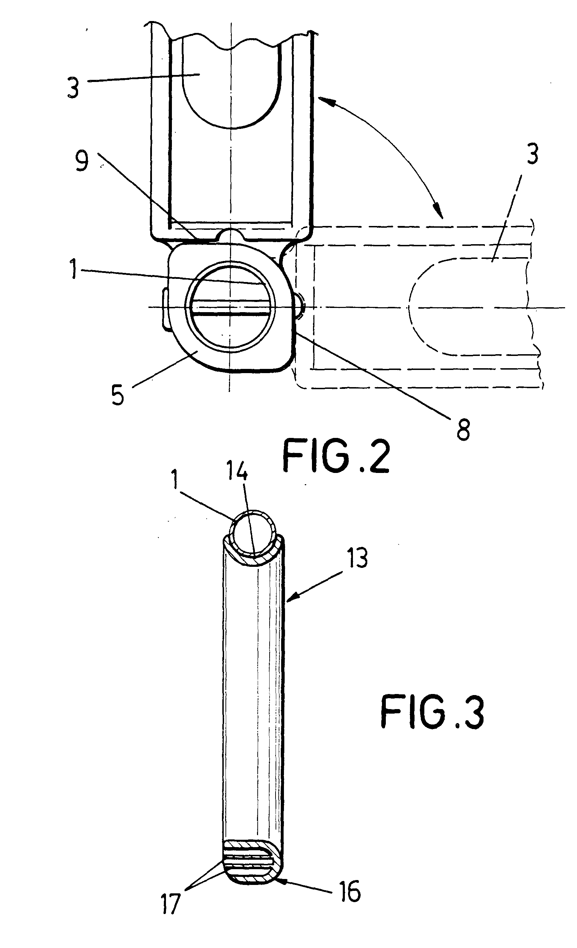

Figure 2 represents a sectional view of the bottom part of the cart where some retaining means of the folded and unfolded positions of the front supports are essentially shown. These means constitute part of the improvements of the cart of the invention.
Figure 3 represents a sectional view of the top part of the frame of the cart that includes a handle that constitutes another part of the novelty of the invention.

### DESCRIPTION OF THE PREFERRED EMBODIMENT

An embodiment of the improved shopping cart is described hereinafter.

It comprises an inverted U-shaped frame (1), in whose branches some front supports (2) supporting respective wheels (3) are coupled underneath and jointedly. These supports (2) are retained by some top (4) parts and other bottom parts (5), all of them fastened to the branches of the frame (1).

The cart includes a bottom support (6) where a shopping bag sits, a bag that is jointedly coupled to the top parts (4). This support (6) as well as the two front supports (2) are collapsible and they can take on two stable positions: a folded one and another unfolded one.

In the unfolded position, the wheels (3) of the front support (2) are arranged in parallel planes facing forward, whereas the bottom support (6) will adjust in some recesses (7) of the front supports (2).

On the other hand, the folded and unfolded positions of the front supports (2) are secured by means of the bottom parts (5) integral to the bottom ends of the frame (1). For this purpose, these bottom parts (5) include two perpendicular planes (8) and (9) where the front supports (2) abut in their end collapsed positions that correspond with the folding and unfolding.

In order to be able to turn the front supports (2), the bottom support (6) should come loose from the recesses (7) of the cited front supports (2) in order to release them.

The cart includes another rear support (10) with wheels (11) like the cart of utility model number 9902348. This new support (10) couples jointedly to the branches of the frame (1) above the top parts (4) by means of a cross shaft (12) and it may also take on a folded position parallel to the cited frame (1) and an unfolded position where the rear support (10) will be placed in an inclined plane.

The cart includes an independent handle (13), essentially of plastic material, that is inserted in the top part of the frame (1).

This handle (13) comprises a structure defined by an essentially rectangular shaped closed frame, three of whose sides have a grooved profile (14) that fits and adapts inside and complementally against the crossbar (15) of the frame (1) and against the top sections of the two branches of the cited frame (1). On the contrary, the other side constitutes a reinforcement crossbar (16) strongly reinforced by an inside rib (17) that rigidifies the frame (1) without the need to use additional elements as in other conventional carts.

The assembly of the handle (13) is extremely simple, since it slides on the center area of the frame and is blocked by the curvature itself of the vertical tubes on which it slides.

The handle (13) also constitutes an efficient ornamental element of the curved areas of the tube, deformed inside by the curving process.

Although the handle (13) has a rectangular shape, the same may have any other shape that adapts to the top part of the corresponding frame.

The branches of the frame (1) are connected underneath by means of a cross rod (18).

## Claims

1. Improved shopping cart, that comprises at least:
- an inverted U-shaped frame;
- two foldable front supports that couple jointedly to the bottom sections of the branches of the frame, supports retained axially by means of some top parts and other bottom parts integral to the branches of the frame;
- a bottom support where a shopping bag sits;
- a handle;
**characterized in that** it includes stable means for retaining the front supports (2) in their end folded and unfolded positions, which are achieved by turning said front supports (2) conveniently.

2. Improved shopping cart, according to the preceding claim, **characterized in that** the stable means for retaining the front supports (2) in their end positions consist of some stops upon which said front supports (2) contact when we turn them up to their end positions.

3. Improved shopping cart, according to the preceding claim, **characterized in that** the stops retaining the end folded and unfolded positions of the front supports (2) are located in the bottom parts (5) integral to the ends of the branches of the frame (1).

4. Improved shopping cart, according to the preceding claim, **characterized in that** the stops retaining the end positions of the front supports (2) consist of some perpendicular planes (8 and 9) established in the bottom parts (5).

5. Improved shopping cart, according to claim 1, **characterized in that** the handle consists of an independent frame (13) that inserts in the top part of the frame (1).

6. Improved shopping cart, according to the preceding claim, **characterized in that** at least one part of the independent frame (13) constituting the handle, has a grooved profile (14) that fits and adapts complementally in the crossbar (15) and top sections of the branches of the frame (1).

7. Improved shopping cart, according to claim 5, **characterized in that** the handle (13) inserts inside the frame (1).

8. Improved shopping cart, according to claim 5, **characterized in that** the handle (13) inserts outside the frame (1).

9. Improved shopping cart, according to claims 5 and 6, **characterized in that** the handle (13) includes a reinforcement crossbar (16) that goes from one branch to the other of the frame (1).

10. Improved shopping cart, according to claim 9, **characterized in that** the reinforcement crossbar (16) of the handle (13) includes a reinforcement rib (17).

11. Improved shopping cart, according to claim 5, **characterized in that** the independent frame (13) constituting the handle has an essentially closed structure.
